# EUROPÄISCHE PATENTSCHRIFT

(11) **EP 0 831 114 B1**
(45) Veröffentlichungstag und Bekanntmachung des Hinweises auf die Patenterteilung: **07.07.2004**
(21) Anmeldenummer: 97115794.6
(22) Anmeldetag: 11.09.1997
(51) Int. Cl.: C08J 7/04, B60K 15/03

(54) **Verfahren zur Beschichtung von Kunststofformkörpern**
Method for coating plastic articles
Procédé de revêtement d'objets en matière plastique

(30) Priorität: 18.09.1996 DE 19637912
(43) Veröffentlichungstag der Anmeldung: 25.03.1998
(73) Patentinhaber: Basell Polyolefine GmbH, 50389 Wesseling (DE)
(72) Erfinder: Neumann, Petra, Dr., 67459 Böhl-Iggelheim (DE); Rösch, Joachim, Dr., 67063 Ludwigshafen (DE); Büschges, Ulrich, Dr., 67157 Wachenheim (DE)

(56) Entgegenhaltungen:
- EP-A- 0 392 115
- EP-A- 0 558 886
- EP-A- 0 585 662
- DE-C- 3 925 901
- GB-A- 1 014 687
- GB-A- 2 021 976
- US-A- 4 376 087

## Beschreibung

Gegenstand der vorliegenden Erfindung, ist ein Verfahren zur Beschichtung von Kunststofformkörper sowie Kunststofformkörper, welche nach diesen Verfahren erhältlich sind.

Kunststofformkörper, insbesondere Hohlkörper wie Flaschen, Kanister oder Tanks, weisen häufig eine erhebliche Permeation, besonders für kleine organische Moleküle auf. Um diese Permeation zu verringern, kann die Oberfläche solcher Hohlkörper, insbesondere von Kunststoff-Kraftstoffbehältern (KKBs) und Heizöltanks auf verschiedene Weise modifiziert werden. Verbreitet ist z.B. eine Fluorierung oder Sulfonierung der Behälteroberfläche (Sperrschichtbildung in Kunststoff-Hohlkörpern, in: Plastverarbeiter 37 (6), VDI-Verlag 1986). Solche Modifizierungen führen zu einer deutlich herabgesetzten Permeation, z.B. für häufig in Kraftstoffen vorhandenes Methanol. Für die technische Anwendung muß diese Permeationsbarriere jedoch dauerhaft beständig sein und muß mechanische Belastungen über lange Zeiträume überdauern. In dieser Hinsicht lassen die bisher bekannten Verfahren zur Oberflächenbehandlung solcher Kunststofformköper jedoch zu wünschen übrig.

In EP-A-0 585 662 und US-A-4 376 087 werden Verfahren zur Beschichtung von Kunststoffgegenständen beschrieben, wobei zunächst die Oberfläche fluoriert und anschließend ein Lack aufgetragen wird. Der Aufbau dauerhafter Permeationsbarrieren wird in diesen Dokumenten nicht beschrieben.

Die Aufgabe der vorliegenden Erfindung bestand daher darin, ein Verfahren zur Beschichtung von Kunststofformkörpern zu finden, welches die Permeation kleinerer organischer Moleküle wie Methanol dauerhaft verhindert, so daß auch nach langandauernder mechanischer Belastung nur ein geringer Anstieg der Permeation zu verzeichnen ist.

Demgemäß wurde ein Verfahren zur Beschichtung von Kunststofformkörpern gefunden, welches dadurch gekennzeichnet ist, daß man die Oberfläche der Formkörper zunächst fluoriert, sulfoniert, oxidiert oder in anderer Weise aktiviert und anschließend mit einem Silanlack überzieht, wobei der Silanlack Silane der allgemeinen Formel I. 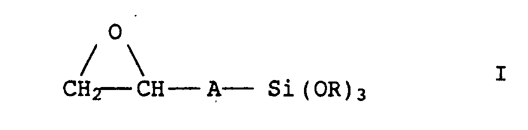 enthält, in welcher die Variablen die folgende Bedeutung haben:
- A: C₁-C₂₀-Alkylen, wobei nicht benachbarte Methylen gruppen, mit Ausnahme derjenigen in α- und ω-Position, durch Sauerstoff in Etherfunktion ersetzt sein können und
- R: C₁-C₄-Alkyl.

Weiterhin wurden Kunststofformköper gefunden, die nach diesem Verfahren erhältlich sind.

Die Kunststofformkörper, welche nach dem erfindungsgemäßen Verfahren beschichtet werden können, können aus verschiedenen Kunststoffen hergestellt worden sein. Als Grundmaterial kommen beispielsweise Polyethylen, Polypropylen, Polyethylenterephthalat, Polyamid und PVC in Betracht. Vorzugsweise bestehen die zu beschichtenden Kunststofformköper im wesentlichen aus Polyethylen, insbesondere aus Polyethylen höhere Dichte (HDPE). Neben reinen Kunststoffen kommen auch Blends der genannten Kunststoffe untereinander oder mit weiteren Komponenten in Betracht. Auch Verbundstrukturen aus Schichten verschiedener Kunststoffe oder Fasern sind als Grundkörper für das erfindungsgemäße Beschichtungsverfahren geeignet.

Besonders vorteilhaft eignet sich das erfindungsgemäße Verfahren zur Beschichtung von KKBs. KKBs müssen in vielen Ländern bestimmte Emissionsgrenzwerte erfüllen. Eine dauerhafte Erfüllung dieser Grenzwerte auch nach mechanischer Beanspruchung kann durch das erfindungsgemäße Beschichtungsverfahren erreicht werden.

Nach dem erfindungsgemäßen Beschichtungsverfahren wird die Oberfläche des Kunststofformkörpers, insbesondere diejenige, die mit einer permeierbaren Substanz wie Methanol in Kontakt kommt, zunächst in bekannter Weise fluoriert.

Geeignete Fluorierungsverfahren sind beispielsweise in "Sperrschichtbildung in Kunststoff-Hohlkörpern", in: Plastverarbeiter 37 (6), VDI-Verlag 1986, S. 107 - 117 und Sulfonierungsverfahren ebenda, S. 97 - 107, beschrieben. Die Fluorierung stellt für diesen ersten Verfahrensschritt eine geeignete Oberflächenbehandlung dar.

Im Anschluß wird die derart vorbereitete Oberfläche des Formkörpers mit einem Silanlack überzogen, welcher Silane der allgemeinen Formel I 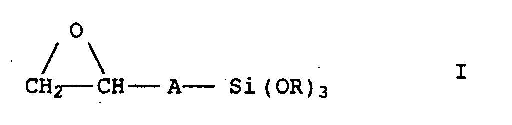 enthält, in welcher die Variablen die folgende Bedeutung haben:
- A: C₁-C₂₀-Alkylen, wobei nicht benachbarte Methylengruppen, mit Ausnahme derjenigen in α- und ω-Position, durch Sauerstoff in Etherfunktion ersetzt sein können und
- R: C₁-C₄-Alkyl.

Als Brückenglied A kommt dabei Methylen, Ethylen sowie geradkettiges oder verzweigtes Propylen, Butylen, Pentylen, Hexylen, Heptylen, Octylen, Nonylen, Decylen, Undecylen, Dodecylen, Tridecylen, Tetradecylen, Pentadecylen, Hexadecylen, Heptadecylen, Octadecylen, Nonadecylen und Eicosylen in Betracht.

In diesen Alkylenbrückengliedern können Methylengruppen- bis auf die endständigen- durch Sauerstoff in Etherfunktion ersetzt sein. Derartige Brückenglieder A leiten sich vorzugsweise von Ethylenoder Propylenoxid ab, enthalten also Polyethylenglykol- oder Polypropylenglykoleinheiten. Ein besonders bevorzugtes Brückenglied A weist die Struktur -CH₂-O-CH₂-CH₂- auf.

Die Reste R bedeuten vorzugsweise Methyl, jedoch kommen auch Ethyl, n-Propyl, Isopropyl, n-Butyl, Isobutyl, sec.-Butyl und tert.-Butyl in Betracht.

Eine bevorzugte Silanverbindung I ist die Verbindung

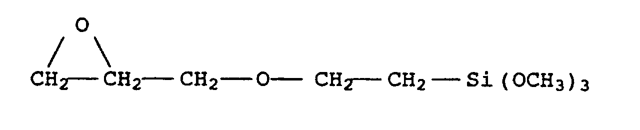

Besonders wirkungsvoll sind Silanlacke, welche durch Quervernetzung in ein stabiles Netzwerk überführt werden können. Als Verbindungen, die solche Quervernetzungen, beispielsweise in Kombination mit den Silanverbindungen I, bewirken können, kommen beispielsweise Diamino-, Dithio- oder Dihydroxyverbindungen in Betracht, wobei Dihydroxyverbindungen bevorzugt sind. Eine besonders geeignete quervernetzende Dihydroxyverbindung ist 2,2-p-Hydroxyphenylpropan, das sogenannte Bisphenol A.

Zur Beschichtung der durch Fluorierung vorbehandelten Kunststoff oberfläche wird im allgemeinen zuerst die Silanverbindung mit einer stöchiometrisch berechneten Menge Wasser in Gegenwart von etwas Säure in die entsprechende Siloxanverbindung überführt. Dieses Gemisch wird dann mit einer Lösung, der quervernetzenden Verbindung in einem organischen Lösungsmittel versetzt und in Gegenwart eines Katalysators zur Reaktion gebracht.

Als Lösungsmittel eignen sich besonders leichtflüchtige, polare Lösungsmittel wie Aceton, Methanol, Ethanol, n-Propanol und besonders Isopropanol.

Als Katalysator eigenen sich basische Verbindungen, besonders tertiäre Amine; besonders bevorzugt wird Methylimidazol verwendet. Die Menge des Katalysators richtet sich nach der Menge der vernetzenden Verbindung. Im allgemeinen werden Katalysator und quervernetzende Verbindungen im Molverhältnis 0,05:1 bis 1:1 eingesetzt, vorzugsweise im Molverhältnis 0,1:1 bis 0,5:1.

Das Gemisch aus dem hydrolysierten Silan, der quervernetzenden Verbindung, dem Lösungsmittel und dem Katalysator wird innig vermischt und kann dann auf verschiedene, bekannte Art und Weise auf die Kunststoffoberfläche aufgetragen werden, z.B. durch Tauchen, Spritzen, Rollen oder Streichen. Vorzugsweise erfolgt die Beschichtung durch Tauchen.

Die Beschichtung sowie die Aushärtung kann bei verschiedene Temperaturen vorgenommen werden, beispielsweise zwischen 10°C und 150°C, vorzugsweise bei 20 bis 130°C, wobei besonders zur Aushärtung und Trocknung höhere Temperaturen, etwa von 80 bis 140°C vorteilhaft sind.

Die Trocknung kann auch durch Reduzierung des Drucks beschleunigt werden, im allgemeinen werden jedoch alle Arbeitsgänge bei Umgebungsdruck ausgeführt. Eine ausreichende Ventilation ist für eine schnelle und gleichmäßige Trocknung vorteilhaft.

Die nach dem erfindungsgemäßen Verfahren erhältlichen Kunststofformkörper weisen eine sehr geringe Permeation von organischen Lösungsmitteln, insbesondere von Methanol auf. Diese geringe Permeation nimmt auch nach langandauernder mechanischer Belastung, wenn überhaupt, nur wenig zu. Die folgenden Beispiele erläutern die Erfindung

### Beispiele

### Beispiel 1

### Herstellung eines Silanlacks

19,1 g (0,1 mol) Glycidyloxypropyltrimethoxysilan wurden langsam unter Rühren mit 1,35 ml 0.05 N HCl (entsprechend ca. 0,075 mol Wasser) versetzt. Das Gemisch wurde ohne Kühlung für eine Stunde gerührt und dann mit einer Lösung von 9,12 g (0,04 mol) Bisphenol A und 0,82 g (0,01 mol) N-Methylimidazol in 15 ml Isopropanol zusammengegeben. Dieses Gemisch wurde noch 2 Stunden bei 25°C gerührt und nach ca. 5 Stunden bis maximal 20 Stunden verarbeitet.

### Beispiel 2

### Beschichtung von Polyethylenflaschen

250 ml Polyethylenflaschen (Hersteller: Fa. Haltermann, Hamburg) wurden durch off-line-Fluorierung fluoriert. Anschließend wurden die Flaschen sorgfältig mit 50 ml des Silanlackgemisches gemäß Beispiel 1 ausgeschwenkt, überschüssiger Lack wurde verworfen. Durch Erhitzen auf 90°C für 10 min wurde das Lösungsmittel abgedampft, anschließend wurden die Flaschen 5 Stunden bei 80°C im Trockenschrank getrocknet.

### Beispiel 3

### Untersuchung des Permeationsverhaltens von erfindungsgemäß beschichteten Polyethylenflaschen im Vergleich mit nicht erfindungsgemäß behandelten Flaschen

Die gemäß Beispiel 2 beschichteten Polyethylenflaschen wurden mit 100,0 g des Testmediums FAM-B (Synthetischer Prüfkraftstoff aus iso-Octan, Toluol, Methanol und Wasser nach DIN 51684, Hersteller Fa. Haltermann, Hamburg) befüllt und mit PE-Schraubkappe und Gummidichtung verschlossen. Die Testflaschen wurden gewogen und für 30 Tage bei unterschiedlichen Temperaturen geschüttelt. Anschließend wurde durch Auswiegen der Flaschen die Gewichtsabnahme durch Permeation ermittelt. Das Ergebnis zeigt die folgende Tabelle:

| Behandlung der Testflasche | Permeation bei 25°C | Permeation bei 40°C |
|---|---|---|
| unbehandelt (Vergleichsbeispiel) | 17,1 % | 42,1 % |
| nur Silanlack (Vergleichsbeispiel) | 20,9 % | 44,8 % |
| nur fluoriert (Vergleichsbeispiel) | 0,6 % | 4,3 % |
| Fluorierung + Silanlack | 0,2 % | 1,2 % |

### Beispiel 4

Der Permeationsversuch gemäß Beispiel 3 wurde mit dem Testmedium CEC 85 (Standardreferenzkraftstoff der europäischen Kommission, Fa. Haltermann, Hamburg) durchgeführt. Das Ergebnis zeigt die folgende Tabelle:

| Behandlung der Testflasche | Permeation bei 25°C | Permeation bei 40°C |
|---|---|---|
| unbehandelt (Vergleichsbeispiel) | 24,0 % | 56,4 % |
| nur Silanlack (Vergleichsbeispiel) | 29,3 % | 58,5 % |
| nur fluoriert (Vergleichsbeispiel) | 0,02 % | 0,06 % |
| Fluorierung + Silanlack | 0,02 % | 0,02 % |

## Patentansprüche

1. Verfahren zur Beschichtung von Kunststofformkörpern, **dadurch gekennzeichnet, daß** man die Oberfläche der Formkörper zunächst fluoriert und anschließend mit einem Silanlack überzieht wobei der Silanlack Silane der allgemeinen Formel I 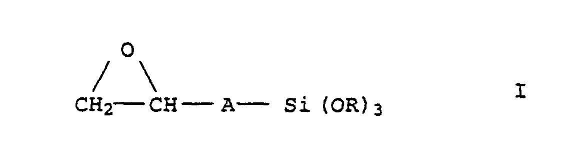 enthält, in welcher die Variablen die folgende Bedeutung haben:
A C₁-C₂₀-Alkylen, wobei nicht benachbarte Methylengruppen, mit Ausnahme derjenigen in α- und ω-Position, durch Sauerstoff in Etherfunktion ersetzt sein können und
R C₁-C₄-Alkyl.

2. Verfahren zur Beschichtung von Kunststofformkörpern nach Anspruch 1, **dadurch gekennzeichnet, daß** der Kunststofformkörper im wesentlichen aus Polyethylen besteht.

3. Verfahren zur Beschichtung von Kunststofformkörpern nach Anspruch 1 oder 2, **dadurch gekennzeichnet, daß** der Kunststofformköper ein Kunststoff-Kraftstoffbehälter ist.

4. Verfahren zur Beschichtung von Kunststofformkörpern nach den Ansprüchen 1 bis 3, **dadurch gekennzeichnet, daß** der Silanlack noch quervernetzende Dihydroxyverbindungen enthält.

5. Verfahren zur Beschichtung von Kunststofformkörpern nach Anspruch 4, **dadurch gekennzeichnet, daß** der Silanlack als quervernetzende Dihydroxyverbindung Bisphenol A enthält.

6. Kunststofformköper erhältlich nach einem Verfahren gemäß den Ansprüchen 1 bis 5

7. Kunststofformkörper nach Anspruch 6 in Form eines Kunststoff-Kraftstoffbehälters.

## Claims

1. A method of coating molded plastics articles, which comprises first of all fluorinating the surface of the article and then covering it with a silane coating material, wherein the silane coating material comprises silanes of the formula I 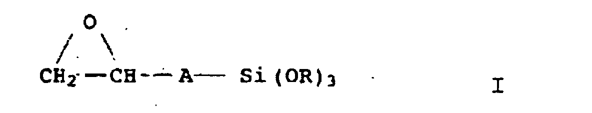 where
A is C₁-C₂₀-alkylene, in which nonadjacent methylenes other than those in positions α and ω can be replaced by oxygen in ether function, and
R is C₁-C₄-alkyl.

2. A method as claimed in claim 1, wherein the molded plastics article consists essentially of polyethylene.

3. A method as claimed in claim 1 or 2, wherein the molded plastics article is a plastic fuel tank.

4. A method as claimed in any of claims 1 to 3, wherein the silane coating material additionally comprises crosslinking dihydroxy compounds.

5. A method as claimed in claim 4, wherein the silane coating material comprises bisphenol A as crosslinking dihydroxy compound.

6. A molded plastics article obtainable by a method as claimed in any of claims 1 to 5.

7. An article as claimed in claim 6 in the form of a plastic fuel tank.

## Revendications

1. Procédé pour le revêtement d'objets en matière plastique, **caractérisé par le fait qu'**on fluore d'abord la surface de l'objet et qu'on recouvre ensuite avec une laque de silane, tandis que la laque de silane contient des silanes de formule générale I 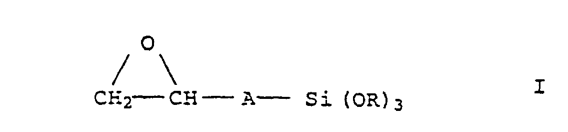 dans laquelle les variables ont la signification suivante:
A alkylène en C₁-C₂₀, tandis que des groupes méthylène non voisins, à l'exception de ceux en position α et ω, peuvent être remplacés par l'oxygène dans la fonction éther, et
R alkyle en C₁-C₄.

2. Procédé pour le revêtement d'objets en matière plastique selon la revendication 1, **caractérisé par le fait que** l'objet en matière plastique consiste essentiellement en du polyéthylène.

3. Procédé pour le revêtement d'objets en matière plastique selon la revendication 1 ou 2, **caractérisé par le fait que** l'objet en matière plastique est un récipient en matière plastique pour carburant.

4. Procédé pour le revêtement d'objets en matière plastique selon les revendications 1 à 3, **caractérisé par le fait que** la laque de silane contient encore des composés dihydroxylés pour réticulation transversale.

5. Procédé pour le revêtement d'objets en matière plastique selon la revendication 4, **caractérisé par le fait que** la laque de silane contient comme composé dihydroxylé pour réticulation transversale du bisphénol A.

6. Objet en matière plastique pouvant être obtenu par un procédé selon les revendications 1 à 5.

7. Objet en matière plastique selon la revendication 6 sous forme d'un réservoir en matière plastique pour carburant.
